# EUROPÄISCHE PATENTSCHRIFT

(11) **EP 2 275 306 B1**
(45) Veröffentlichungstag und Bekanntmachung des Hinweises auf die Patenterteilung: **30.10.2013**
(21) Anmeldenummer: 10004371.0
(22) Anmeldetag: 24.04.2010
(51) Int. Cl.: B60R 5/04

(54) **Laderaumabdeckung eines Kraftfahrzeuges als Kassette**
Storage space covering of a motor vehicle as cassette
Recouvrement de l'espace de chargement d'un véhicule automobile comme cassette

(30) Priorität: 13.07.2009 DE 102009032893
(43) Veröffentlichungstag der Anmeldung: 19.01.2011
(73) Patentinhaber: Volkswagen Aktiengesellschaft, 38440 Wolfsburg (DE)
(72) Erfinder: Koch, Christian, 38116 Braunschweig (DE); Gaas, Matthias, 38442 Wolfsbrug (DE)

(56) Entgegenhaltungen:
- EP-A2- 1 844 984
- WO-A1-2010/112154
- DE-C1- 19 854 772
- FR-A1- 2 912 097

## Beschreibung

Die Erfindung betrifft eine Laderaumabdeckung eines Kraftfahrzeugs als Kassette nach dem Oberbegriff des Anspruchs 1.

Bei Kombifahrzeugen ist der Laderaum hinter den Rücksitzen ohne zusätzliche Maßnahmen von außen her einsehbar. Insbesondere aus Gründen des Diebstahlschutzes ist daher in solchen Fahrzeugen üblicherweise eine Laderaumabdeckung vorgesehen, die als Abdecktuch aus einer Rollokassette oder als plattenförmige Abdeckung etwa in Höhe der Rückenlehnenoberkante nach hinten bis zur Heckklappe verläuft. Für eine Laderaumvergrößerung, insbesondere bei nach vorne geklappten Rückenlehnen der Rücksitze ist eine Laderaumabdeckung regelmäßig einfach aus dem Fahrzeug entfernbar und wieder einsetzbar.

Dazu ist eine allgemein bekannte gattungsgemäße Laderaumabdeckung als langgestreckte, in Fahrzeugquerrichtung montierbare Kassette ausgebildet. Die Kassette umfasst wenigstens eine endseitige, gegenüber einem Kassettenkörper vorgespannte Schiebekappe mit einem Rastfortsatz, der in eine aufbauseitige Rastaufnahme einrastbar ist, sowie einen gegenüberliegenden Rastfortsatz, der in eine entsprechend zugeordnete zweite Rastaufnahme zur Halterung der Kassette einrastbar ist.

Für eine Entnahme der Laderaumabdeckung insbesondere zur Vergrößerung des Laderaums wird die Kassette durch Verschieben der federvorgespannten Schiebekappe in ihrer Länge etwas reduziert, so dass wenigstens ein Rastfortsatz aus einer zugeordneten Rastaufnahme so weit freikommt, dass die Kassette aus ihrer Halterung genommen werden kann. Eigentlich ist für eine solche Längenreduzierung nur eine endseitige Schiebekappe erforderlich, es können jedoch auch an beiden Endseiten solche Schiebekappen vorgesehen werden.

Die Schieberichtung der Schiebekappe sowie die Richtung deren Federvorspannung verläuft in Kassettenlängsrichtung und entsprechend im eingebauten Zustand in Fahrzeugquerrichtung. Es ist nicht völlig auszuschließen, dass in ungünstigen Fällen bei einer schlagartigen Stoßbelastung zum Beispiel bei einer Fahrzeugkollision durch die Trägheitskraft der Kassette in Richtung der federvorgespannten Schiebekappe die Kassette durch eine Längenreduzierung ungewollt aus ihrer Rasthalterung freikommt.

Die Druckschrift EP 1 844 984 A2 offenbart eine Laderaumabdeckung gemäß dem Oberbegriff von Anspruch 1.

Aufgabe der Erfindung ist es, eine gattungsgemäße Laderaumabdeckung so weiterzubilden, dass die Wahrscheinlichkeit einer ungewollten Lösung der Kassette aus ihrer Halterung bei einer Stoßbelastung weiter verringert wird.

Diese Aufgabe wird durch eine Laderaumabdeckung gemäß Anspruch 1 gelöst. Vorteilhafte Weiterbildungen sind Gegenstand der weiteren Ansprüche.

Die Funktion eines Dämpferelements liegt darin, dass es bei einer längeren Krafteinwirkung entsprechend in Kraftrichtung nachgiebig ist, jedoch einer Stoßbelastung eine starke Gegenkraft ohne Nachgiebigkeit entgegensetzt. Vorteilhaft wird somit durch ein solches Dämpferelement eine Handverschiebung der Schiebekappe durch eine relativ langsame Bewegung für eine Montage oder Demontage der Laderaumabdeckung praktisch nicht beeinflusst, da hier im Wesentlichen nur die Vorspannfeder ohne Dämpferfunktion wirkt. Bei einer schlagartigen Stoßbelastung (zum Beispiel in einem Kollisionsfall) auf die Schiebekappe bei montierter Laderaumabdeckung wird jedoch durch die Dämpferfunktion eine Verschiebung der Schiebekappe verhindert, so dass auch für diesen Falle eine sichere Halterung der Laderaumabdeckung durch die Rastfortsätze in ihren Rastaufnahmen gewährleistet ist.

Grundsätzlich sind für die vorstehende Funktion mehrere Arten von Dämpferelementen mit den angegebenen Eigenschaften einsetzbar. In der Lösung nach Anspruch 1 werden hydraulische oder pneumatische Dämpferelemente verwendet, wie sie im Fahrzeugbau üblich sind.

Forderungen nach einem geringen Einbauraum in Verbindung mit einer kosten- und gewichtsgünstigen Lösung lassen sich gut erfüllen, wenn die Vorspannfeder und das Dämpferelement eine Baueinheit bilden. Das Dämpferelement kann dabei als Zylinder-Kolben-Einheit ausgeführt werden, die zudem im Innenbereich einer Spiral-Druckfeder als Vorspannfeder angeordnet sein kann. Insgesamt kann eine solche Baueinheit dann im Innenbereich der Schiebekappe integriert werden.

Die erfindungsgemäße Halterung in Verbindung mit wenigstens einem Dämpferelement ist besonders geeignet für eine Kassette, die als Rollokassette mit einem ausziehbaren Abdecktuch ausgebildet ist, da die Rollokassette mit aufgerolltem Abdecktuch besonders einfach zu handhaben ist. Grundsätzlich ist jedoch auch eine Ausführung möglich, bei der an ein Kassettenteil in der Art eines Querträgerteils eine feste, plattenförmige Abdeckung gegebenenfalls mit einer Schwenkverbindung angeschlossen ist.

Anhand einer Zeichnung wird die Erfindung weiter erläutert.

Es zeigen:
- Fig. 1: einen Blick von hinten in ein schematisch dargestelltes Kombifahrzeug bei geöffneter Heckklappe mit einer Laderaumabdeckung; und
- Fig. 2: eine schematische Teilansicht einer Kassette im Schiebekappenbereich.

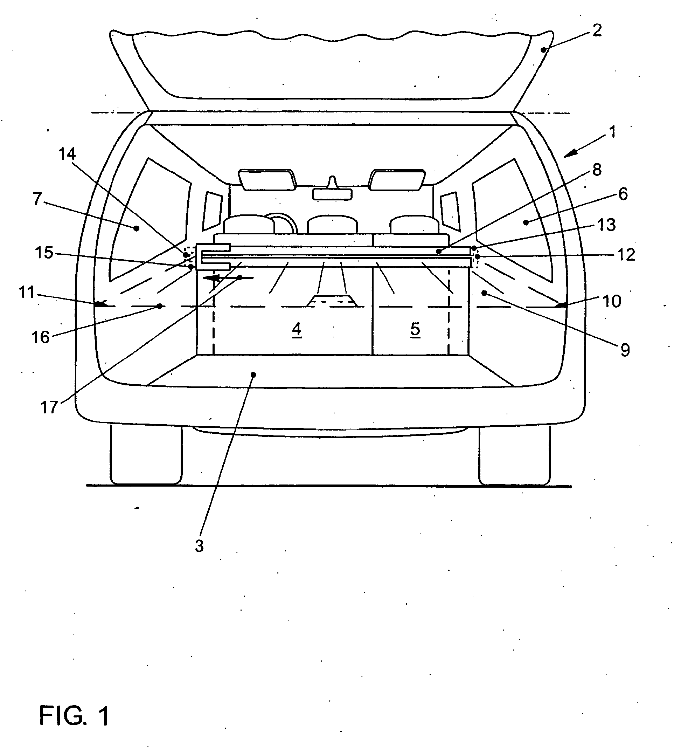

In Fig. 1 ist schematisch ein Kombifahrzeug 1 mit geöffneter Heckklappe 2 dargestellt mit einem Blick von hinten in einen Laderaum 3. Der Laderaum 3 wird nach vorne begrenzt durch zwei asymmetrische, hochgestellte Rückenlehnen 4, 5 von Rücksitzen.

Für eine Abdeckung des Laderaums 3 unterhalb der Rückfenster 6, 7 zur Heckklappe 2 hin ist in Fahrzeugquerrichtung in der entsprechenden Höhe eine Rollokassette 8 eingesetzt, aus der bedarfsweise ein Abdecktuch 9 (strichliert eingezeichnet) in der Breite des Laderaums 3 gegen die Kraft einer Aufrollfeder ausziehbar und an seinen hinteren Ecken 10, 11 an zugeordneten aufbauseitigen Hakenelementen einhängbar ist.

Im dargestellten montierten Zustand der Rollokassette ist diese (rechts) mit einem endseitigen Rastfortsatz 12 in eine zugeordnete Rastaufnahme 13 eingesetzt. Entsprechend ist die Halterung auch gegenüberliegend (links) mit einem Rastfortsatz 14 in eine zweite aufbauseitige Rastaufnahme 15 eingesetzt. Der Rastfortsatz 14 ist hier in Längsrichtung auf einer federvorgespannten Schiebekappe 16 angeordnet, wobei die Federkraft (Pfeil 17) in Richtung auf die zugeordnete Rastaufnahme 15 wirkt.

Für eine Demontage der Rollokassette 8, insbesondere für eine Laderaumvergrößerung mit nach vorne geklappten Rückenlehnen 4, 5 wird die Schiebekappe 16 gegen die Federkraft von Hand für eine Längenverkürzung der Rollokassette 8 verschoben, so dass sie aus den Rastaufnahmen 13, 15 entnommen werden kann. Bei einem erneuten Einsetzen der Rollokassette 8 wird entsprechend in umgekehrter Reihenfolge verfahren.

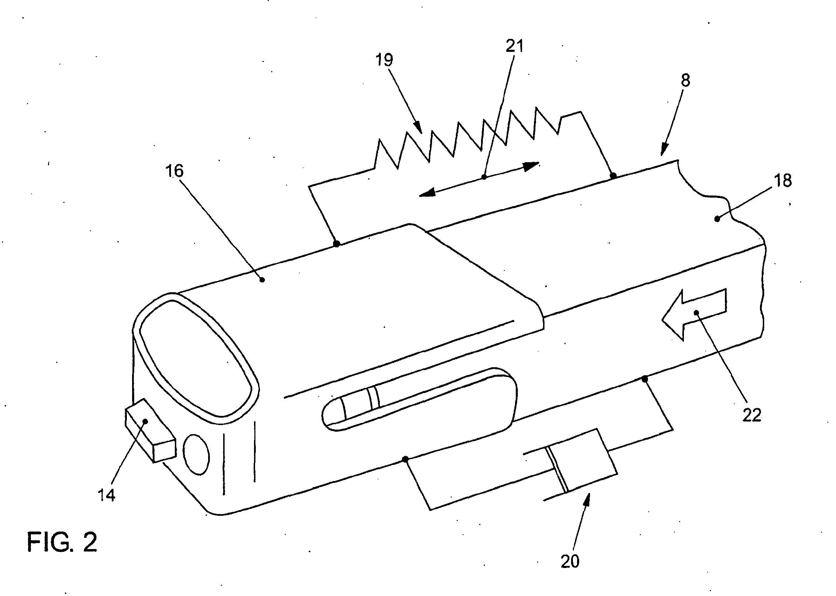

In Fig. 2 ist ein Teil der Rollokassette 8 im Bereich der Schiebekappe 16 schematisch dargestellt mit dem Rastfortsatz 14 an der Stirnseite der Schiebekappe 16. Die Schiebekappe 16 ist auf einen Kassettenkörper 18 endseitig aufgesteckt, wobei im Innenbereich sowohl eine Vorspannfeder 19 als auch ein Dämpferelement 20 in der Art einer Zylinder-Kolben-Einheit zwischen dem Kassettenkörper 18 und der Schiebekappe 16 angeordnet sind. Da die erfindungsgemäße Funktion in unterschiedlichen Anordnungen und Ausführungsformen erreichbar ist, sind zur Verdeutlichung der Funktion die Vorspannfeder 19 und das Dämpferelement 20 schematisch und getrennt außerhalb des Kassettenkörper 18 und der Schiebekappe 16 eingezeichnet. Bevorzugt bilden die Vorspannfeder 19 als Spiraldruckfeder und das Dämpferelement 20 jedoch eine Baueinheit.

Die Vorspannfeder 19 schiebt die Schiebekappe 16 gegen einen Anschlag gegenüber dem Kassettenkörper 18 nach außen, wobei diese Vorspannkraft zur Längenreduzierung der Rollokassette 8 überdrückbar ist (Doppelpfeil 21). Durch das Dämpferelement 20 werden relativ langsame Schiebebewegungen nur unwesentlich beeinflusst. Bei schlagartigen kollisionsbedingten Stoßkräften (Pfeil 22) blockiert dagegen das Dämpferelement 20 weitgehend eine Schiebebewegung, so dass der Kassettenkörper 18 nicht durch eine ungewollte Längenreduzierung der Rollokassette 8 aus der gegenüberliegenden Halterung am Rastfortsatz 12 und der Rastaufnahme 13 freikommen kann.

### Bezugszeichenliste

- 1: Kombifahrzeug
- 2: Heckklappe
- 3: Laderaum
- 4: Rückenlehnen
- 5: Rückenlehnen
- 6: Rückfenster
- 7: Rückfenster
- 8: Rollo-Kassette
- 9: Abdecktuch
- 10: Ecken
- 11: Ecken
- 12: Rastfortsatz
- 13: Rastaufnahme
- 14: Rastfortsatz
- 15: Rastaufnahme
- 16: Schiebeklappe
- 17: Pfeil
- 18: Kassettenkörper
- 19: Vorspannfeder
- 20: Dämpferelement
- 21: Doppelpfeil
- 22: Pfeil

## Patentansprüche

1. Laderaumabdeckung eines Kraftfahrzeugs als Kassette (8); mit wenigstens einer endseitigen, gegenüber einem Kassettenkörper (18) federvorgespannten Schiebekappe (16) mit einem Rastfortsatz (14), der in eine aufbauseitige Rastaufnahme (15) einrastbar ist, sowie einem gegenüberliegenden Rastfortsatz (12), der in eine entsprechend zugeordnete zweite Rastaufnahme (13) zur Halterung der Kassette (8) in Fahrzeugquerrichtung einrastbar ist, wobei zwischen dem Kassettenkörper (18) und der Schiebekappe (16) wenigstens ein Dämpferelement (20) angeordnet ist, **dadurch gekennzeichnet,**
- **dass** das Dämpferelement (20) mit hydraulischer und/oder pneumatischer Funktion ausgerüstet ist,
- und **dass** durch das Dämpferelement (20) relativ langsame Schiebebewegungen nur unwesentlich beeinflusst werden,
- während bei schlagartigen kollisionsbedingten Stoßkräften dagegen das Dämpferelement (20) weitgehend eine Schiebebewegung blockiert.

2. Laderaumabdeckung nach Anspruch 1, **dadurch gekennzeichnet, dass** eine Vorspannfeder (19) und das Dämpferelement (20) eine Baueinheit bilden.

3. Laderaumabdeckung nach Anspruch 2, **dadurch gekennzeichnet, dass** das Dämpferelement (20) als Zylinder-Kolben-Einheit ausgeführt ist.

4. Laderaumabdeckung nach Anspruch 3, **dadurch gekennzeichnet, dass** die Vorspannfeder (19) eine Spiral-Druckfeder ist und das Dämpferelement (20) im Innenbereich der Spiral-Druckfeder angeordnet ist.

5. Laderaumanordnung nach einem der Ansprüche 1 bis 4, **dadurch gekennzeichnet, dass** eine Vorspannfeder (19) und das wenigstens eine Dämpferelement (20) im Inneren des Schiebekappenbereichs integriert sind.

6. Laderaumanordnung nach einem der Ansprüche 1 bis 5, **dadurch gekennzeichnet, dass** die Kassette als Rollo-Kassette (8) mit einem ausziehbaren Abdecktuch (9) ausgebildet ist.

7. Laderaumanordnung nach einem der Ansprüche 1 bis 5, **dadurch gekennzeichnet, dass** an die Kassette (8) eine feste plattenförmige Abdeckung gegebenenfalls mit einer Schwenkverbindung angeschlossen ist.

## Claims

1. Storage space covering of a motor vehicle as a cassette (8), with at least one end-side sliding cap (16) which is spring-pretensioned in relation to a cassette body (18) and has a latching extension (14) which is latchable into a body-side latching receptacle (15), and with an opposite latching extension (12) which is latchable into a correspondingly assigned second latching receptacle (13) for holding the cassette (8) in the transverse direction of the vehicle, wherein at least one damping element (20) is arranged between the cassette body (18) and the sliding cap (16), **characterized**
- **in that** the damping element (20) is provided with a hydraulic and/or pneumatic function,
- **in that** relatively slow sliding movements are only insubstantially influenced by the damping element (20),
- whereas, in contrast, the damping element (20) substantially blocks a sliding movement in the event of sudden impact forces caused by a collision.

2. Storage space covering according to Claim 1, **characterized in that** a pretensioning spring (19) and the damping element (20) form a constructional unit.

3. Storage space covering according to Claim 2, **characterized in that** the damping element (20) is in the form of a cylinder/piston unit.

4. Storage space covering according to Claim 3, **characterized in that** the pretensioning spring (19) is a spiral compression spring, and the damping element (20) is arranged in the inner region of the spiral compression spring.

5. Storage space covering according to one of Claims 1 to 4, **characterized in that** a pretensioning spring (19) and the at least one damping element (20) are integrated in the interior of the sliding cap region.

6. Storage space covering according to one of Claims 1 to 5, **characterized in that** the cassette is designed as a roller-blind cassette (8) with an extendable covering cloth (9).

7. Storage space covering according to one of Claims 1 to 5, **characterized in that** a fixed, panel-like covering is connected to the cassette (8) optionally by a pivoting connection.

## Revendications

1. Recouvrement de l'espace de chargement d'un véhicule automobile sous forme de cassette (8) ; comprenant au moins un capuchon coulissant (16) situé à une extrémité, précontraint par ressort par rapport à un corps de cassette (18) et pourvu d'un prolongement d'encliquetage (14) qui peut être encliqueté dans un logement d'encliquetage (15) situé du côté de la carrosserie, et comprenant un prolongement d'encliquetage (12) opposé qui peut être encliqueté dans un deuxième logement d'encliquetage (13) associé de manière correspondante pour supporter la cassette (8) dans la direction transversale du véhicule, au moins un élément amortisseur (20) étant disposé entre le corps de cassette (18) et le capuchon coulissant (16), **caractérisé**
- **en ce que** l'élément amortisseur (20) est doté d'une fonction hydraulique et/ou pneumatique,
- et **en ce que** les mouvements de coulissement relativement lents ne sont influencés que de manière négligeable par l'élément amortisseur (20),
- tandis que, dans le cas de forces d'impact soudaines causées par une collision, l'élément amortisseur (20) bloque en revanche dans une large mesure un mouvement de coulissement.

2. Recouvrement de l'espace de chargement selon la revendication 1, **caractérisé en ce qu'**un ressort de précontrainte (19) et l'élément amortisseur (20) forment une unité de construction.

3. Recouvrement de l'espace de chargement selon la revendication 2, **caractérisé en ce que** l'élément amortisseur (20) est réalisé sous forme d'unité cylindre-piston.

4. Recouvrement de l'espace de chargement selon la revendication 3, **caractérisé en ce que** le ressort de précontrainte (19) est un ressort de compression spiral et l'élément amortisseur (20) est disposé dans la région intérieure du ressort de compression spiral.

5. Recouvrement de l'espace de chargement selon l'une quelconque des revendications 1 à 4, **caractérisé en ce qu'**un ressort de précontrainte (19) et l'au moins un élément amortisseur (20) sont intégrés dans l'intérieur de la région du capuchon coulissant.

6. Recouvrement de l'espace de chargement selon l'une quelconque des revendications 1 à 5, **caractérisé en ce que** la cassette est réalisée sous forme de cassette de store (8) pourvue d'une étoffe de recouvrement (9) pouvant être sortie.

7. Recouvrement de l'espace de chargement selon l'une quelconque des revendications 1 à 5, **caractérisé en ce qu'**un recouvrement fixe en forme de plaque se raccorde à la cassette (8) éventuellement par une liaison pivotante.
